# EUROPEAN PATENT APPLICATION

(11) **EP 4 528 551 A1**
(43) Date of publication of application: **26.03.2025**
(21) Application number: 23896596.6
(22) Date of filing: 21.11.2023
(51) Int. Cl.: G06F 16/957

(54) **MULTIMEDIA OBJECT SHARING METHOD AND APPARATUS, ELECTRONIC DEVICE, AND STORAGE MEDIUM**

(30) Priority: 29.11.2022 CN 202211517356
(71) Applicant: Beijing Zitiao Network Technology Co., Ltd., Beijing 100190 (CN)
(72) Inventor: WANG, Yuxiao, Beijing 100028 (CN); ZNEG, Ziyou, Beijing 100028 (CN); QIAN, Yujie, Beijing 100028 (CN)
(74) Representative: Williams, Michael David
(86) International application number: PCT/CN2023/132935
(87) International publication number: WO 2024/114444

(57) **Abstract**

Embodiments of the present disclosure provide a multimedia object sharing method, a multimedia object sharing apparatus, an electronic device, and a storage medium, wherein the method includes: displaying a multimedia list creation page, in response to a trigger operation for multimedia list creation, to edit associated content corresponding to a multimedia list to be shared in the multimedia list creation page; displaying an information editing page to determine a target sharing user and a target shared object in the multimedia list to be shared based on a trigger operation on the information editing page; and sharing the multimedia list to be shared to the target sharing user.

## Description

### CROSS REFERENCE TO RELATED APPLICATION

This application is based on and claims priority from Chinese Patent Application No. 202211517356.3, filed on November 29, 2022, which is incorporated herein by reference in its entirety.

### TECHNICAL FIELD

The embodiments of the present disclosure relate to a technical field of multimedia object processing, and in particular, to a multimedia object sharing method, a multimedia object sharing apparatus, an electronic device, and a storage medium.

### BACKGROUND

At present, multimedia object playing has become one of the essential entertainment ways in life. In order to meet the personalized multimedia object playing requirements of users in different scenes, various application software has a multimedia list creating function on line for the users to add multimedia objects in a customized manner and create a theme multimedia list according with the multimedia object preferences of the users, so that the users can select the favorite multimedia list to play the multimedia objects in different scenes.

However, when a user in a social gathering scene including a plurality of users, the played multimedia list is generally a personal multimedia list of any user, and accordingly, the played multimedia object matches with the preference of the user, and cannot meet the multimedia object requirements of most users, which has certain limitations.

### SUMMARY

The present disclosure provides a multimedia object sharing method, a multimedia object sharing apparatus, an electronic device, and storage medium.

In a first aspect, an embodiment of the present disclosure provides a multimedia object sharing method, comprising:
displaying a multimedia list creation page, in response to a trigger operation for multimedia list creation, to edit associated content corresponding to a multimedia list to be shared in the multimedia list creation page;
displaying an information editing page to determine a target sharing user and a target shared object in the multimedia list to be shared based on a trigger operation on the information editing page, wherein the information editing page includes at least one of an add shared object control, an add sharing user control, or at least one object to be shared; and
sharing the multimedia list to be shared to the target sharing user.

In a second aspect, an embodiment of the present disclosure further provides a multimedia object sharing apparatus, comprising:
a trigger operation response module for displaying a multimedia list creation page, in response to a trigger operation for multimedia list creation, to edit associated content corresponding to a multimedia list to be shared in the multimedia list creation page;
a target shared object determination module for displaying an information editing page to determine a target sharing user and a target shared object in the multimedia list to be shared based on a trigger operation on the information editing page, wherein the information editing page includes at least one of an add shared object control, an add sharing user control, or at least one object to be shared; and
a multimedia list sharing module for sharing the multimedia list to be shared to the target sharing user.

In a third aspect, an embodiment of the present disclosure further provides an electronic device, the electronic device comprising:
one or more processors;
a storage apparatus for storing one or more programs,
wherein the one or more programs when executed by the one or more processors cause the one or more processors to implement the multimedia object sharing method according to any one of the embodiments of the present disclosure.

In a fourth aspect, an embodiment of the present disclosure further provides a storage medium containing computer-executable instructions, which, when executed by a computer processor, are used to perform the multimedia object sharing method according to any one of the embodiments of the present disclosure.

### BRIEF DESCRIPTION OF THE DRAWINGS

The above and other features, advantages, and aspects of various embodiments of the present disclosure will become more apparent with reference to the following detailed description taken in conjunction with the accompanying drawings. Throughout the drawings, the same or similar reference numbers refer to the same or similar elements. It is to be understood that the drawings are schematic and that originals and elements are not necessarily drawn to scale.
FIG. 1 is a schematic flowchart of a multimedia object sharing method provided by an embodiment of the present disclosure;
FIG. 2 is a schematic diagram of a multimedia list creation page provided by an embodiment of the present disclosure;
FIG. 3 is a schematic diagram of a multimedia object presentation interface provided by an embodiment of the present disclosure;
FIG. 4 is a schematic flowchart of a multimedia object sharing method provided by an embodiment of the present disclosure;
FIG. 5 is a schematic flowchart of a multimedia object sharing method provided by an embodiment of the present disclosure;
FIG. 6 is a schematic flowchart of a multimedia object sharing method provided by an embodiment of the present disclosure;
FIG. 7 is a schematic diagram of a sharing interface provided by an embodiment of the present disclosure;
FIG. 8 is a schematic structural diagram of a multimedia object sharing apparatus provided by an embodiment of the present disclosure;
FIG. 9 is a schematic structural diagram of an electronic device provided by an embodiment of the present disclosure.

### DETAILED DESCRIPTION

Hereinafter, embodiments of the present disclosure will be described in more detail with reference to the accompanying drawings. Although some embodiments of the present disclosure are shown in the drawings, it should be understood that the present disclosure may be implemented in many different forms, and it should not be construed as being limited to embodiments set forth herein, rather, these embodiments are provided for a more thorough and complete understanding of the present disclosure. It should be understood that the drawings and embodiments of the present disclosure are merely illustrative, and not used to limit the protection scope of the present disclosure.

It should be understood that various steps recited in the method embodiments of the present disclosure may be executed in a different order, and/or executed in parallel. In addition, the method implementations may include additional steps and/or omit to perform illustrated steps. The scope of the present disclosure is not limited in this respect.

The term "including" and its variants as used herein are open includes, that is, "including but not limited to". The term "based on" means "based at least in part on." The term "one embodiment" means "at least one embodiment"; the term "another embodiment" means "at least one additional embodiment"; the term "some embodiments" means "at least some embodiments." Related definitions of other terms will be given in following description.

It should be noted that, the concepts of "first" and "second" etc., mentioned in the present disclosure are only used to distinguish between different apparatus, modules or units, and are not used to limit the order of functions performed by these apparatus, modules or units or their interdependence. It should be noted that, modifiers of "one" and "a plurality of" mentioned in the present disclosure are illustrative and not restrictive, and those skilled in the art should understand that they should be construed as "one or more" unless the context make a clear indication otherwise.

The names of messages or information interacted between a plurality of apparatus in the implementation of the present disclosure are only used for illustration, and are not used to limit the scope of these messages or information.

It can be understood that, before the technical solutions disclosed in the embodiments of the present disclosure are used, the type, scope of usage, usage scenes, etc., of personal information involved in the present disclosure should be informed to the user and obtain the user's authorization in an appropriate manner in accordance with relevant laws and regulations.

For example, in response to receiving an active request from a user, prompt information is sent to the user to explicitly prompt the user that the requested operation to be performed would require acquisition and usage of personal information of the user. Therefore, the user can autonomously choose whether to provide personal information to software or hardware such as an electronic device, an application program, a server, or a storage medium that performs operations of the technical solutions of the present disclosure according to the prompt information.

As an optional but non-limiting implementation, in response to receiving an active request from the user, the method of sending the prompt information to the user may be, for example, a pop-up window, and the prompt information may be presented in the form of text in the pop-up window. In addition, the pop-up window can also contain a selection control for providing the user to choose "agree" or "disagree" to provide personal information to the electronic device.

It can be understood that the above process of notifying and obtaining user authorization is only illustrative and does not limit the implementation of the present disclosure. Other ways that satisfy relevant laws and regulations can also be applied to the implementation of the present disclosure.

It can be understood that data involved in the technical solutions (including but not limited to the data itself, the acquisition or usage of the data) should comply with the requirements of corresponding laws, regulations, and related specifications.

Before introducing the technical solutions, an application scene of the embodiments of the present disclosure may be described exemplarily. When multimedia objects need to be played based on a preset multimedia list in occasions such as a social gathering or a gathering of many people, the multimedia objects in the multimedia list usually have certain limitations and only meet the multimedia object preferences of the creator of the multimedia list. Therefore, there may be a case where the currently played multimedia object does not conform to multimedia object preferences of any user, but the user does not want to actively request to skip this multimedia object, or a case where the multimedia objects included in the multimedia list do not conform to the requirements of the current scene. At this time, based on the technical solutions of the embodiments of the present disclosure, a multimedia list to be shared can be created, and a target sharing user and a target shared object in the multimedia list to be shared can be determined, and furthermore, the multimedia list to be shared can be shared to the target sharing user, which achieves an effect that a multimedia list creating user and at least one multimedia list sharing user share and manage a multimedia list together, enriches application scenes of the multimedia list, and improves the user experience.

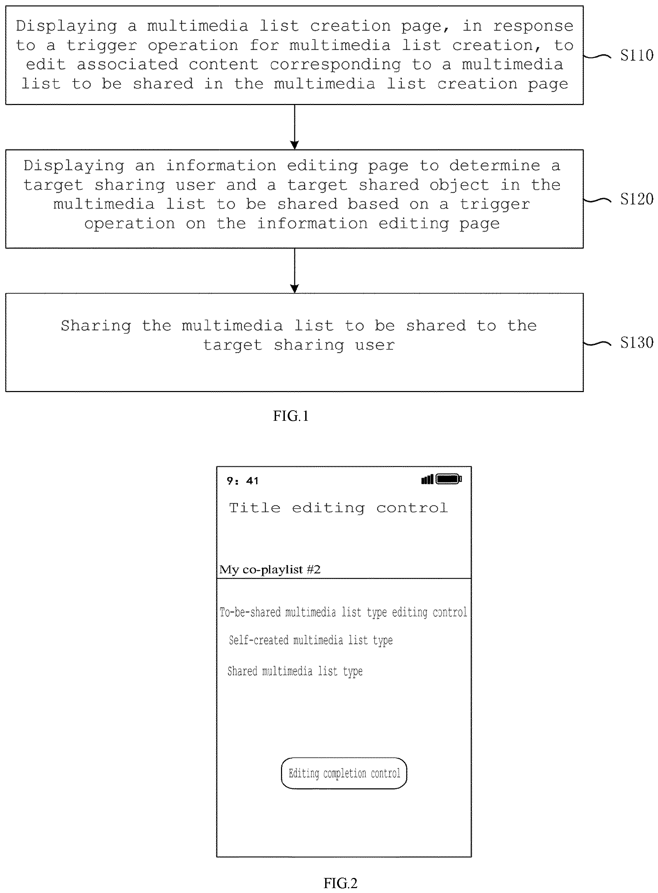

FIG. 1 is a schematic flowchart of a multimedia object sharing method provided by an embodiment of the present disclosure. The embodiment of the present disclosure is applicable to a situation where a multimedia list creation user and at least one target sharing user manage together the same multimedia list to be shared. This method may be performed by a multimedia object sharing apparatus, which may be implemented in the form of software and/or hardware. Optionally, it may be implemented through an electronic device, which may be a mobile terminal, a PC, or a server.

As illustrated in FIG. 1, the method comprises:
S110: displaying a multimedia list creation page, in response to a trigger operation for multimedia list creation, to edit associated content corresponding to a multimedia list to be shared in the multimedia list creation page.

It should be noted that, the technical solution provided by the embodiment of the present disclosure may be applied to a multimedia object sharing scene. For example, it may be integrated into any application software that can share audios or videos, and the software may be installed into an electronic device. Optionally, the electronic device may be a mobile terminal or a PC, etc. The application software may be a type of software that includes a multimedia object sharing function. The specific application software thereof will not be described here, as long as it can realize the multimedia object sharing function. It can also be a specially developed application program to realize sharing of multimedia object information, or it may be integrated in a corresponding page, and the user can realize the sharing of multimedia objects through the page integrated in the terminal.

In this embodiment, in the application software or application program that supports the multimedia object sharing function, a control for performing the multimedia list creation function may be developed in advance. When it is detected that the user triggers the control, it can respond to the trigger operation for multimedia list creation, so as to display a corresponding page. Wherein, the multimedia list creation control may be any form of control, optionally, it may be a "+" control or a "+New Playlist" control. It should be noted that, the multimedia list creation controls displayed in different tabs in the same application software may be different or the same, and this is not specifically limited in the embodiment of the present disclosure. Exemplarily, when a multimedia list creation operation is performed on a "Me tab" page, then the "+" control may be clicked; when a multimedia list creation operation is performed on a page which is not the "Me tab" page, then the "+New Playlist" control may be clicked.

In this embodiment, the multimedia list creation page may be a page for editing multimedia list information to be created. The multimedia list creation page may include at least one control for performing editing of multimedia list information. Optionally, the multimedia list creation page includes a title editing control and a to-be-shared multimedia list type editing control, so that title information of the multimedia list to be shared is edited in the title editing control, and a multimedia list type is selected in the to-be-shared multimedia list type editing control. Exemplarily, as shown in FIG. 2, that is a schematic diagram of a multimedia list creation page.

Wherein, the title editing control may be a control for editing the name of the multimedia list to be created. Optionally, the editing of the name of the multimedia list may include operations such as adding, deleting, and changing the name of the multimedia list.

Wherein, the to-be-shared multimedia list type editing control may be a control for selecting the type of the multimedia list to be created. Wherein, the multimedia list type includes at least a shared multimedia list type. Wherein, the shared multimedia list type may be used to characterize that the multimedia list is created by multiple people collaboratively, and all collaborators involved in the creation may browse and edit the multimedia list. The multimedia list type may also include a personal multimedia list type. Wherein, the personal multimedia list type may include at least one of a favorite multimedia list type, a self-created multimedia list type, or a bookmark multimedia list type. The favorite multimedia list type may be used to characterize that songs in this multimedia list are all songs that meet the preference of the user. The self-created multimedia list type may be used to characterize that this multimedia list is created by the user self and can only be edited by the user. The bookmark multimedia list type may be used to characterize that this multimedia list is a multimedia list created by others and is bookmarked by the user.

It should be noted that, in the actual application process, the personal multimedia list type and the shared multimedia list type may also be switched to each other. Specifically, any list type included in the personal multimedia list type may be switched to the shared multimedia list type, and the shared multimedia list type may also be switched to any list type included in the personal multimedia list type.

In this embodiment, the multimedia list to be shared may be a multimedia list that may be shared to any user, and at the same time, the users who it is shared to can manage this multimedia list together. Accordingly, the associated content may be content used to characterize detailed information of the multimedia list to be shared. Optionally, the associated content may include the name of the multimedia list to be shared, the type of the multimedia list to be shared, the user corresponding to the multimedia list to be shared, and so on.

In a specific implementation, when it is detected that the user triggers the multimedia list creation control, it can respond to the trigger operation for multimedia list creation, so as to display a multimedia list creation page, and further, based on at least one control included in the multimedia list creation page, the associated content corresponding to the multimedia list to be shared can be edited. The specific editing process of the associated content may be described below.

Optionally, editing the associated content corresponding to the multimedia list to be shared in the multimedia list creation page, comprises: editing title information of the multimedia list to be shared in the title editing control; editing name of the multimedia list in the to-be-shared multimedia list name editing control, and dynamically displaying the number of editable words during editing the name of the multimedia list; selecting a multimedia list type in the to-be-shared multimedia list type editing control, to update the type number corresponding to the multimedia list type based on the selected multimedia list type.

In this embodiment, the title information may be information indicating the intention of the user when creating the multimedia list to be shared, and main content in the multimedia list to be shared. Wherein, the title information is related to the time, mood and/or environment of sharing the multimedia list to be shared. It should be noted that, a preset character number threshold corresponding to the number of characters of the title information may be set in advance. When it is detected that the number of characters of the title information being edited exceeds this threshold, continued editing is no longer supported. At the same time, during the title information editing, emoticons may be edited into the title information as well. The preset character number threshold may be any value, optionally, it may be 40 characters.

In this embodiment, the name of the multimedia list may be a name of the multimedia list to be created. Wherein, the name of the multimedia list includes text and/or a label. The text may be text used to characterize the name of the multimedia list, and the label may be used to characterize the number of multimedia lists of this type created by the user plus 1. It should be noted that, when the user has not started editing the name of the multimedia list to be shared, a default name may be presented, and the default name may correspond to the type of the multimedia list to be shared, for example, "My playlist #num." or "My co-playlist #num.". Wherein, "My playlist" is the name of the multimedia list, and "#num." is the label, which may represent the number of multimedia lists of this type currently created by the user plus 1. Exemplarily, if a user has a favorite multimedia list, 3 self-created multimedia lists, 1 shared multimedia list and 12 bookmarked multimedia lists from others, the corresponding default names of the multimedia lists may be "My playlist #4" and "My co-playlist #2".

In this embodiment, at least one multimedia list type may be displayed in the to-be-shared multimedia list type editing control. At the same time, these multimedia list types may include multimedia list types set by the system by default, and may also include user-defined multimedia list types. In the actual application process, a selection trigger control may be developed in advance in any display area corresponding to each multimedia list type. When a trigger operation on the control by the user is detected, it may be considered that a selection operation of a corresponding multimedia list type is triggered. It should be noted that, when the multimedia list type is not selected, a self-created multimedia list type may be selected by default.

In a specific implementation, when the multimedia list creation page is displayed in a display interface, the user can edit the title information of the multimedia list to be shared in the title editing control based on time, mood and/or environment. Further, the user can edit the multimedia list name of the multimedia list to be shared in the to-be-shared multimedia list editing control, and during editing of the multimedia list name, the number of editable words, that is, the number of remaining characters, can also be dynamically displayed. Finally, a multimedia list type may be selected in the to-be-shared multimedia list type editing control, so that the type number corresponding to the respective multimedia list type may be updated according to the selected multimedia list type. The advantage of this setting is that the detailed information of the multimedia list to be shared may be personalized based on user needs, thereby meeting the personalized needs of the user and improving the user experience.

It should be noted that, after the creation of a multimedia list to be shared is completed, the user who creates the multimedia list may also update the associated content. When a trigger operation on the multimedia list editing control is detected, it may jump to a multimedia list editing page to update the associated content based on the multimedia list editing page. Wherein, the multimedia list editing page includes multimedia list cover information, a multimedia list title editing control, a multimedia list description editing control, a multimedia list type switching control and a viewable status switching control. In the actual application process, when a trigger operation on the multimedia list title editing control is detected, it jumps to a multimedia list title input page to input the title of the multimedia list to be shared based on the multimedia list title input page, and when a trigger operation on a title saving control is detected, it returns to the multimedia list editing page; when a trigger operation on the multimedia list description editing control is detected, it jumps to a multimedia list description input page to input the description of the multimedia list to be shared based on the multimedia list description input page, and when a trigger operation on the description saving control is detected, it returns to the multimedia list editing page; when a trigger operation on the multimedia list type switching control is detected, the multimedia list type of the multimedia list to be shared may be switched; when a trigger operation on the viewable status switching control is detected, the status of the multimedia list to be shared may be switched.

S120: displaying an information editing page to determine a target sharing user and a target shared object in the multimedia list to be shared based on a trigger operation on the information editing page.

In this embodiment, an editing completion control may be developed in advance in any area of the multimedia list creation page. When a trigger operation on this control by the user is detected, the information editing page may be displayed. Wherein, the editing completion control may be any form of control, optionally, it may be a "Create" control. The information editing page may be a page for editing detailed information corresponding to the multimedia list to be shared. In the actual application process, when the editing of associated content corresponding to the multimedia list to be shared is completed on the multimedia list creation page, the multimedia list to be shared is an empty list at this time. Therefore, information of the multimedia list to be shared may be edited based on the trigger operation on the information editing page. The information editing page may include at least one control, optionally, including at least one of an add shared object control, an add sharing user control, or at least one object to be shared. Wherein, the add shared object control may be a control used to perform an operation of adding a shared object to the multimedia list to be shared. Exemplarily, the add shared object control may be an "Add songs" control. The add sharing user control may be a control used to perform the operation of inviting target sharing users to manage the multimedia list to be shared together. Exemplarily, the add sharing user control may be an "invite co-creators" control. The target sharing user may be a collaborator associated with the multimedia list to be shared, and at the same time, the collaborator is determined based on a collaboration invitation operation of the multimedia list creator. The target shared object may be a shared object added to the multimedia list to be shared. Wherein, the shared object may be an audio or a video. It should be noted that, the target shared object may be determined based on both of the multimedia list creator and the target sharing user associated with the multimedia list to be shared.

In a specific implementation, when a trigger operation on an associated content editing completion control by the user is detected, it may jump to the information editing page from the multimedia list creation page, and further, based on trigger operations on respective controls included in the information editing page, the target sharing user and the target shared object in the multimedia list to be shared may be determined.

In the actual application process, when determining a target sharing user, the target sharing user may be pre-selected, and when a trigger operation of adding a sharing user space is detected, the pre-selected target sharing user may be processed, or the target sharing user may also be determined from a plurality of sharing users after jumping to the information editing page. These two situations corresponding to determining target sharing users will be described below respectively.

One situation may be that: after jumping to the information editing page, it further comprises, if a target sharing user is not selected when the multimedia list creation operation is triggered, jumping to a sharing user list presentation interface, to determine target sharing users based on a trigger operation on the sharing user list presentation interface.

In this embodiment, the sharing user list presentation interface may include a plurality of sharing users, and user identifiers corresponding to individual sharing users. Optionally, the user identifiers may be user avatars and/or user names, etc. Wherein, sharing users included in the sharing user list are all users associated with the creator of the multimedia list. It should be noted that, the presentation method of the sharing user list presentation interface may be pop-up window presentation, full-screen presentation, partial screen presentation, etc.

In the actual application process, if a target sharing user is not selected when the multimedia list creation operation is triggered, that is, after entering the information editing page, the sharing users of the multimedia list to be shared may be detected, and if it is detected that the users associated with this multimedia list to be shared only include the creator of the multimedia list, it may jump to the sharing user list presentation interface from the information editing page. Furthermore, the target sharing user may be determined through a selection trigger operation on a sharing user included in the sharing user list. The advantage of this setting is that it achieves an effect of determining a target sharing user in real time, meets the personalized needs of the user, and improves the user experience.

Another situation may be that: after jumping to the information editing page, it further comprises, if a target sharing user has been selected when the multimedia list creation operation is triggered, determining the user number of the target sharing users when triggering the control to add sharing users is detected; and determining target feedback information according to the user number and a preset quantity threshold.

In this embodiment, the preset quantity threshold may be a value that is set in advance and makes a limitation on the number of the target sharing users associated with any multimedia list to be shared. The preset quantity threshold may be any value, and optionally, it may be 100. The preset quantity threshold may be set in advance based on the system, or may be customized based on user needs, which is not specifically limited in the embodiments of the present disclosure. The target feedback information may be information determined according to different situations and fed back to the user.

In the actual application process, if a target sharing user has been selected when the multimedia list creation operation is triggered, that is, after entering the information editing page, the sharing user of the multimedia list to be shared may be detected, and if it is detected that the users associated with this multimedia list to be shared include the target sharing user, a trigger operation can be performed on the add sharing user control. When the trigger operation on the add sharing user control is detected, the user number of the selected target sharing users may be determined. Furthermore, according to the user number and a preset user quantity threshold, the target feedback information is determined. The advantage of this setting is that it achieves an effect that the application software feeds back different feedback information in a targeted manner under different circumstances, and improves the intelligence of the application software.

In the actual application process, when determining the target feedback information, it will be determined based on the magnitude relationship between the user number and the preset quantity threshold. Specifically, the target feedback information determined when the user number is greater than or equal to the preset quantity threshold is different from the target feedback information determined when the user number is less than the preset quantity threshold. These two situations will be described below respectively.

Optionally, determining the target feedback information according to the user number and the preset quantity threshold comprises: if the user number is greater than or equal to the preset quantity threshold, the target feedback information is a prompt- "cannot be shared to more users"; and if the user number is less than the preset quantity threshold, the target feedback information indicates jumping to the sharing user list presentation interface, to determine the target sharing user based on the trigger operation on the sharing user list presentation interface.

In a specific implementation, if the user number is greater than or equal to the preset quantity threshold, the multimedia list to be shared cannot be shared to other users. At this time, the target feedback information is a prompt - "cannot be shared to more users". At the same time, the sharing user list presentation interface cannot be presented. It should be noted that, the presentation method of the prompt - "cannot be shared to more users" - may be in any form, and optionally, it may be a pop-up window. Exemplarily, if it is detected that the user number is greater than or equal to the preset quantity threshold, a window can pop up. At the same time, the pop-up window can present "To share to more users, you need to remove selected users."

In a specific implementation, if the user number is less than the preset quantity threshold, it is considered that the multimedia list to be shared may be shared to more users. At this time, the target feedback information may indicate jumping to the sharing user list presentation interface. Furthermore, the target sharing user may be determined through a selection trigger operation on a sharing user presented in the presentation interface. The advantage of this setting is that it enhances the intelligence of the application software in managing sharing users of the shared multimedia list. At the same time, it improves the interactivity between the user and the application software and improves the user experience.

In the actual application process, the information editing page includes an add shared multimedia object control and at least one multimedia object to be shared. Therefore, when adding a multimedia object to be shared to a multimedia list to be shared, there may be at least two situations. These two situations will be described below respectively.

One situation may be: adding the multimedia object to be shared selected by triggering to the multimedia object to be shared.

In this embodiment, the multimedia object to be shared may be a multimedia object randomly selected by the application software, or a multimedia object determined based on user historical selection data, or a multimedia object determined based on the frequency of selection by other users.

In an actual application, after jumping to the information editing page, through a trigger operation on at least one multimedia object to be shared which is presented in the information editing page, the multimedia object to be shared which is selected by triggering may be added to the multimedia list to be shared.

Another situation may be: displaying a multimedia object presentation interface based on a trigger operation on a multimedia object addition control, so that the multimedia object to be shared selected by triggering in the multimedia object presentation interface is displayed in the multimedia list to be shared.

In this embodiment, the multimedia object presentation interface may be a page that presents all multimedia objects included in the application software.

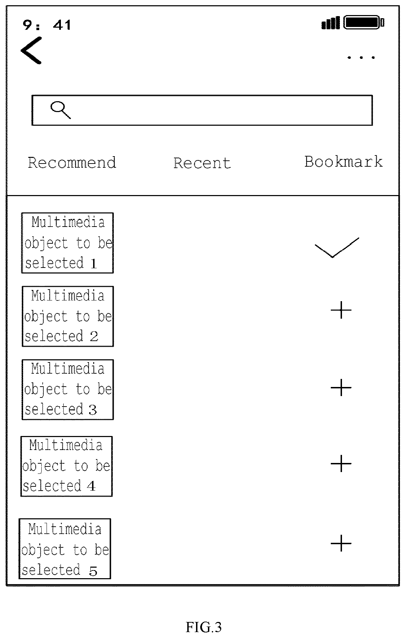

In an actual application, a selection trigger control may be developed in advance in any display area of the multimedia object to be selected which is presented in the multimedia object presentation interface, and a corresponding multimedia object to be shared may be added to the multimedia list to be shared by triggering the corresponding control. Exemplarily, as shown in FIG. 3, "+" may be used as a selection trigger control. When a trigger operation on the selection trigger control corresponding to any multimedia object to be selected is detected, this control may be updated to an added control, e.g., " 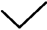 ".

In a specific implementation, when the multimedia objects to be shared included in the information editing page do not meet the user needs, the user can enter a trigger operation on the add shared multimedia object control. When this trigger operation is detected, it may jump to the multimedia object presentation interface. Furthermore, through a trigger operation on a multimedia object to be selected which is presented in the multimedia object presentation interface, the multimedia object to be shared which is selected by triggering may be added to the multimedia list to be shared. The advantage of this setting is that it enhances the variety of ways to add shared multimedia objects, and at the same time, improves the diversity of selections of multimedia objects to be shared, and improves the user experience.

On the basis of the above technical solutions, it further comprises: after selecting a multimedia object to be shared by triggering, displaying at least one multimedia object to be shared associated with the multimedia object to be shared.

In the actual application process, after adding a multimedia object to be shared that is selected by triggering in the multimedia object presentation interface to the multimedia list to be shared, at least one multimedia object to be shared associated with the shared multimedia object may be displayed in a preset area of the multimedia object to be shared based on a preset logical algorithm. Wherein, the at least one multimedia object to be shared may be a multimedia object of the same type as the multimedia object to be shared that is selected by triggering, or may be a multimedia object that has a high similarity to the multimedia object to be shared that is selected by triggering. It should be noted that, the number of associated at least one multimedia object to be shared may be 1, 2, or 3, etc.

S130: sharing the multimedia list to be shared to the target sharing user.

In this embodiment, after determining the target sharing user and the target shared object in the multimedia list to be shared, when it is detected that sharing conditions are met, the multimedia list to be shared may be shared to the target sharing user. Optionally, the sharing conditions may include triggering a sharing control, or triggering words for invoking a sharing by collected audio information, etc.

In this embodiment, a control for triggering the sharing operation may be developed in advance. When it is detected that the user triggers the control, it may be determined that the sharing conditions are met, and the multimedia list to be shared may be shared to the target sharing user. Another implementation may be that: audio information of the user may be collected in advance, and the audio information is analyzed and processed so as to recognize text corresponding to the audio information. If the text corresponding to the audio information includes preset invoking words, which, optionally, may be words such as "Please share the multimedia list to XXX " or "Please share the XXX multimedia list", it indicates that the multimedia list to be shared may be shared to the target sharing user.

In the actual application process, sharing the multimedia list to be shared to the target sharing user may include at least three sharing methods, and these three sharing methods will be described below respectively.

The first method may be that: sharing the multimedia list to be shared to the target sharing user comprises generating a target sharing link based on the multimedia list to be shared, and sending the target sharing link to the target sharing user.

In this embodiment, the target sharing link may include an address corresponding to the multimedia list to be shared and a sharing period. The target sharing user can open the multimedia list to be shared by clicking the address displayed in the target sharing link within the sharing period. In the actual application process, a link generation control may be developed in advance. When a trigger operation on this control by the user is detected, a target sharing link may be generated based on the multimedia list to be shared.

In a specific implementation, when an adding operation for detailed information corresponding to a multimedia list to be shared is completed and sharing conditions are met, a target sharing link corresponding to the multimedia list to be shared may be generated based on a trigger operation on a link generation control, and furthermore, the target sharing link may be sent to a target sharing user, so as to achieve sharing the multimedia list to be shared to the target sharing user.

The second method may be that: sharing the multimedia list to be shared to the target sharing user comprises generating a target identification identifier based on the multimedia list to be shared, and sending the target identification identifier to the target sharing user.

In this embodiment, the target identification identifier may be an identifier used to identify the multimedia list to be shared. The target identification identifier may be any form of identification code, optionally, it may be a QR code, or other styles of identification codes, etc. In the actual application process, an identification identifier generation control may be developed in advance. When it is detected that this control is triggered by a user, the target identification identifier corresponding to the multimedia list to be shared may be generated.

In the actual application process, when it is detected that sharing conditions are met, a target identification identifier corresponding to a multimedia list to be shared may be generated based on a trigger operation on an identification identifier generation control, and furthermore, the target identification identifier may be sent to a target sharing user, so as to archive sharing the multimedia list to be shared to the target sharing user.

It should be noted that, when sending the target identification identifier to the target sharing user, the generated target identification identifier may be saved to a local database, and furthermore, the target identification identifier may be retrieved from the local database and sent to the target sharing user; alternatively, upon the target identification identifier being generated, the target identification identifier may be directly sent to the target sharing user, etc., which is not specifically limited in the embodiments of the present disclosure.

It should be noted that, after generating the target sharing link and the target identification identifier, it may jump to a sharing channel list display interface to determine a target sharing channel based on the sharing channel list display interface, and send the target sharing link or the target identification identifier to the target sharing user based on the target sharing channel.

It should also be noted that, for a terminal device belonging to the target sharing user that supports sharing by the target sharing link, the target sharing link will be employed preferably, and relevant copywriting and the target sharing link will be sent to the target sharing user. At the same time, a link validity period will be configured for the target sharing link. Exemplarily, it may be 7 days.

The third method may be that: sharing the multimedia list to be shared to the target sharing user comprises determining a corresponding target sharing method according to affiliation information of the target sharing user and a target client, to share the multimedia list to be shared to the corresponding target sharing user based on the target sharing method.

In this embodiment, the affiliation information includes belonging to a site user or a non-site user. Wherein, the site user is a user who has installed the target client. On the contrary, the non-site user may be a user who has not installed the target client, or a user who has not completed registration in the target client. Wherein, the target client may be a client specially developed for realizing multimedia object sharing.

In this embodiment, if the affiliation information indicates belonging to a site user, the corresponding target sharing method may be to pop up a session window corresponding to the individual target sharing user, so as to share the multimedia list to be shared to the target sharing user based on the session window, or generate a common session window based on the site users, so as to share the multimedia list to be shared to the target sharing users based on the common session window. Wherein, the common session window may be a group chat window including a plurality of session members.

In this embodiment, if the affiliation information indicates belonging to a non-site user, the corresponding target sharing method may be to display at least one sharable software, so as to share the multimedia list to be shared to the target sharing user based on a trigger operation on the sharable software. Wherein, the sharable software may be a software that can perform an operation of sending the sharing link or the identification identifier.

In the actual application process, when sending a multimedia list to be shared to target sharing users, it may be first determined whether the target sharing users to be sent to are a site user; if the target sharing users are site users, there may be two corresponding sending methods. One method may be that: when it is detected that sharing conditions are met, session windows corresponding to individual target sharing users can pop up, and furthermore, the multimedia list to be shared may be shared to the target sharing users based on these session windows; another method may be that: when it is detected that the sharing conditions are met, a common session window may be generated based on the site users, and at the same time, session members in this common session window may be at least one target sharing user, and furthermore, the multimedia list to be shared is shared to the target sharing users based on the common session window. If the target sharing user is a non-site user, when it is detected that the sharing conditions are met, a sharable software list presentation interface can pop up, which may display at least one sharable software, and furthermore, the multimedia list to be shared is shared to the target sharing user by a trigger operation on the sharable software. The advantage of this setting is that it enhances the diversity of sharing methods for the multimedia list to be shared, realizes an effect of achieving multimedia list sharing for different types of users, and improves the user experience.

On the basis of the above technical solutions, it further comprises: configuring a sharing period for the multimedia list to be shared, so that individual target sharing users can share the multimedia list to be shared within the sharing period.

In this embodiment, the sharing period may be a sharing validity period for the multimedia list to be shared. The sharing period may be any value, optional, and it may be 7 days.

In the actual application process, a corresponding sharing period may be configured in advance for the multimedia list to be shared, so that individual target sharing users can share the multimedia list to be shared within the sharing period.

It should be noted that, the sharing period may be configured by the user who creates the multimedia list, and the configured sharing period can also be updated.

The technical solution of the embodiment of the present disclosure solves a problem that the played multimedia objects cannot meet the multimedia object requirements of most users and have certain limitations in the related art, achieves an effect that the multimedia list creating user and at least one multimedia list sharing user share and manage the multimedia list together and the multimedia list is endowed with a social attribute, enriches application scenes of the multimedia list, and improves the user experience, by displaying a multimedia list creation page, in response to a trigger operation for multimedia list creation, to edit associated content corresponding to a multimedia list to be shared in the multimedia list creation page, further displaying an information editing page, to determine a target sharing user and a target shared object in the multimedia list to be shared based on a trigger operation on the information editing page, and finally sharing the multimedia list to be shared to the target sharing user.

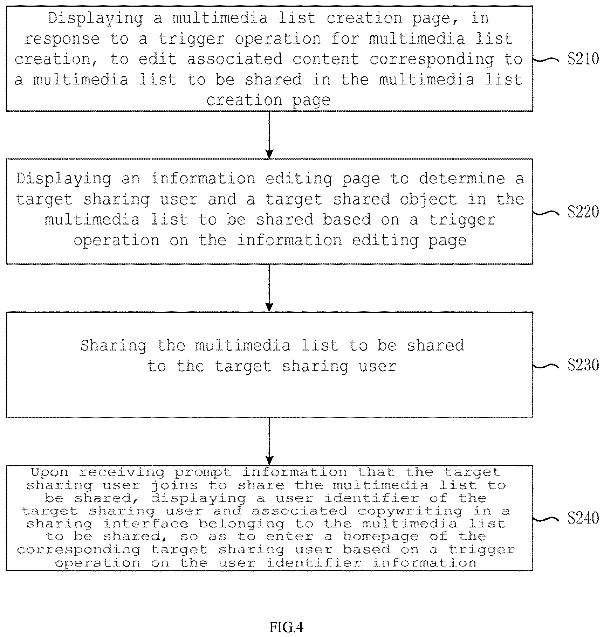

FIG. 4 is a schematic flowchart of a multimedia object sharing method provided by an embodiment of the present disclosure. On the basis of the foregoing embodiments, upon receiving prompt information that a target sharing user joins to share a shared multimedia list to be shared, a user identifier corresponding to the target sharing user may be displayed based on a sharing interface, so as to enter a homepage of the target sharing user based on a trigger operation on the user identifier. The specific implementation thereof may refer to the technical solution of this embodiment. Wherein, the technical terms that are the same as or corresponding to the above embodiments will not be described here again.

As shown in FIG. 4, the method specifically comprises the following steps:
S210: displaying a multimedia list creation page, in response to a trigger operation for multimedia list creation, to edit associated content corresponding to a multimedia list to be shared in the multimedia list creation page.
S220: displaying an information editing page to determine a target sharing user and a target shared object in the multimedia list to be shared based on a trigger operation on the information editing page.
S230: sharing the multimedia list to be shared to the target sharing user.
S240: upon receiving prompt information that the target sharing user joins to share the multimedia list to be shared, displaying a user identifier of the target sharing user and associated copywriting in a sharing interface belonging to the multimedia list to be shared, so as to enter a homepage of the corresponding target sharing user based on a trigger operation on the user identifier information.

In this embodiment, a control for joining to share a multimedia list to be shared may be developed in advance. When it is detected a trigger operation on the control by the target sharing user, prompt information may be generated based on the current trigger operation and sent to terminal devices belonging to the user who creates the multimedia list or other target sharing users who have joined to share the multimedia list to be shared, so that the user who creates the multimedia list or other target sharing users can timely grasp the update condition of the target sharing users of the multimedia list to be shared. The sharing interface may be an interface that displays detailed information of the target sharing user joining to share the share multimedia list to be shared. The associated copywriting may be a copywriting used to characterize prompt information for the target sharing user to join the multimedia list to be shared. Exemplarily, the associated copywriting may be "Target sharing user 1 accepts your invitation to join the multimedia list to be shared 1." The homepage of the target sharing user is a page that displays personal information of the corresponding target sharing user.

In a specific implementation, when it is detected that a target sharing user joins to share a multimedia list to be shared, the user who creates the multimedia list or other target sharing users who have joined to share the multimedia list to be shared may be notified by sending a site message or other notification methods. When these users receive this prompt information, it may jump to the sharing interface for the multimedia list to be shared by a trigger operation on the prompt information, and the user identifier of the corresponding target sharing user and associated copywriting may be displayed in the sharing interface. When a trigger operation on the user identifier by the user is detected, it may jump to the personal homepage of the corresponding target sharing user.

In the actual application process, after the target sharing user joins to share the multimedia list to be shared, corresponding content may be displayed based on a trigger operation on the sharing interface belonging to the multimedia list to be shared.

On the basis of the above technical solutions, it further comprises: if it is detected that the target sharing user triggers the multimedia list to be shared in the sharing interface, determining presentation content of the multimedia list corresponding to the multimedia list to be shared according to a retention status of the multimedia list to be shared.

In this embodiment, the retention status may be used to characterize whether the multimedia list to be shared currently exists and whether it is currently viewable. Optionally, the retention status may include but not limited to a deletion status or a viewable status. The display content of the multimedia list may be detailed information of the multimedia list corresponding to the multimedia list to be shared. Optionally, the display content of the multimedia list may include at least one target shared object included in the multimedia list to be shared, or a presentation page corresponding to the multimedia list to be shared that is developed in advance.

In the specific implementation, for the target sharing users who have joined to share the multimedia list to be shared, it may jump to a corresponding page by triggering the multimedia list to be shared in the sharing interface. If it is detected that the target sharing user triggers the multimedia list to be shared in the sharing interface, a retention status of the multimedia list to be shared may be determined, and furthermore, according to the retention status, presentation content of the multimedia list corresponding to the multimedia list to be shared is determined and presented. The advantage of this setting is that different presented contents may be displayed accordingly, based on the retention status of the multimedia list, which improves the intelligence of the application software.

In the actual application process, the presentation content of the multimedia list corresponds to the retention status of the multimedia list to be shared. When the retention status is different, the corresponding display content of the multimedia list also changes accordingly. The display content of the multimedia list under different retention statuses will be described below in detail.

Optionally, determining presentation content of the multimedia list corresponding to the multimedia list to be shared according to a retention status of the multimedia list to be shared comprises: if the retention status is a deletion status, the presentation content of the multimedia list is to jump to an abnormal page; if the retention status is a viewable status, the presentation content of the multimedia list is at least one target shared object.

In this embodiment, the deletion status may characterize that the multimedia list to be shared is currently deleted. The abnormal page may be a page that is developed to deal with a case where the content which the user needs cannot be found. In the actual application process, for some application software, at least one abnormal page in advance will be developed to deal with a case where the page to which it is jumps after the user enters a trigger operation is a blank page, so that when a blank page occurs, the corresponding abnormal page may be displayed to alleviate users' anxiety.

In a specific implementation, if it is detected that the target sharing user triggers the multimedia list to be shared in the sharing interface and the retention status of the multimedia list to be shared is a deletion status, it may jump to the abnormal page; and if it is detected that the target sharing user triggers the multimedia list to be shared in the sharing interface and the retention status of the multimedia list to be shared is a viewable status, it may jump to a multimedia list detail page of the multimedia list to be shared, at least one target shared object is presented. The advantage of this setting is that it achieves an effect that a corresponding display page may be presented for each different multimedia list retention status, improves the user experience and further enhances the stickiness of users to the application software.

The technical solution of the embodiment of the present disclosure realizes an effect that a multimedia list creation user and multimedia list sharing users interact with each other, enhances the social attribute of the multimedia list and improves the user experience, by displaying a multimedia list creation page, in response to a trigger operation for multimedia list creation, to edit associated content corresponding to a multimedia list to be shared in the multimedia list creation page, further displaying an information editing page to determine a target sharing user and a target shared object in the multimedia list to be shared based on a trigger operation on the information editing page, and finally sharing the multimedia list to be shared to the target sharing user, and upon receiving prompt information that the target sharing user joins to share the multimedia list to be shared, displaying a user identifier of the target sharing user and associated copywriting in a sharing interface belonging to the multimedia list to be shared, so as to enter a homepage of the corresponding target sharing user based on a trigger operation on the user identifier information.

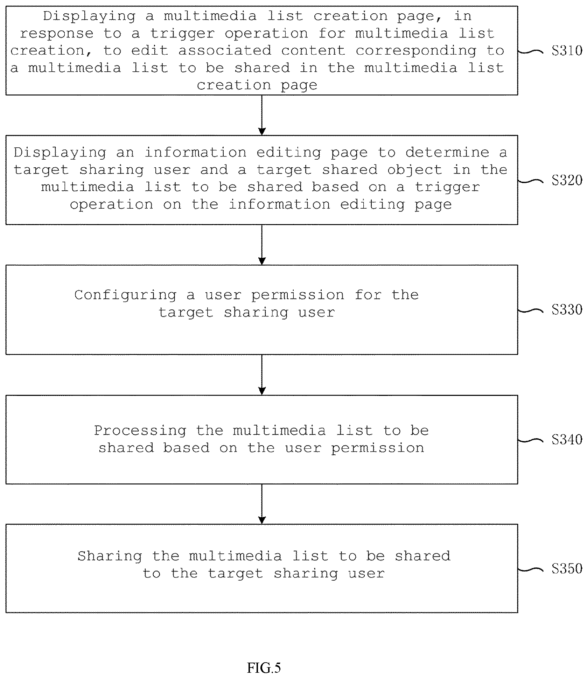

FIG. 5 is a schematic flowchart of a multimedia object sharing method provided by an embodiment of the present disclosure. On the basis of the foregoing embodiments, user permissions may be configured for individual target sharing users, so that the target sharing users edit the multimedia list to be shared based on the corresponding user permissions. The specific implementation thereof may refer to the technical solution of this embodiment. Wherein, the technical terms that are the same as or corresponding to the above embodiments will not be described here again.

As shown in FIG. 5, the method specifically comprises the following steps:
S310: displaying a multimedia list creation page, in response to a trigger operation for multimedia list creation, to edit associated content corresponding to a multimedia list to be shared in the multimedia list creation page.
S320: displaying an information editing page to determine a target sharing user and a target shared object in the multimedia list to be shared based on a trigger operation on the information editing page.
S330: Configuring a user permission for the target sharing user.

It should be noted that, different user permissions have different editing capabilities for the target shared object. Corresponding user permissions may be configured for individual target sharing users according to the requirements of a creating user, to impose certain restrictions on the editing behaviors of the individual target sharing users for the multimedia list to be shared.

In this embodiment, the user permissions are the users' rights. That is, after a user logs in, some functions may be used and some functions cannot be used. This is the permission set for the user. Only users who meet the user permissions can use corresponding functions. The Permissions are restricted ranges of rights. Optionally, the user permissions include a senior role permission and a junior role permission. Wherein, the senior role permission may be a permission that can perform some special functions in addition to basic functions. The junior role permission may be a permission that can only perform basic functions.

In the actual application process, before sharing a multimedia list to be shared to target sharing users, corresponding user permissions may also be configured for individual target sharing users, thereby achieving a permission management for the individual target sharing users. Specifically, a senior role permission and a junior role permission may be set in advance. After determining at least one target sharing user, the individual target sharing users may be grouped by roles, and the individual target sharing users may be divided into a senior role group and a junior role group. At this time, at least one target sharing user in the senior role group may correspond to the senior role permission, and at least one target sharing user in the junior role group can correspond to the junior role permission, so that the user permissions for the individual target sharing users may be determined.

It should be noted that, the permission for a user who creates a multimedia list is an administrator permission, and this permission can support all operations on the multimedia list to be shared.

S340. Processing the multimedia list to be shared based on the user permission.

In this embodiment, after the permission for each target sharing user is determined, the multimedia list to be shared may be processed based on the corresponding user permission.

In the actual application process, the corresponding editing operations are different for different user permissions. Optionally, for a senior user permission, corresponding editing for a target shared object may include operations of deleting the target shared object, adding the target shared object, bookmarking the target shared object, and enjoying the target shared object; for a junior user permission, corresponding editing for a target shared object may include an operation of enjoying the target shared object.

In a specific implementation, after determining the user permissions for individual target sharing users, if the user permission for a target sharing user is a senior role permission, operations such as deleting, adding, bookmarking, and enjoying may be performed on individual target shared objects in the multimedia list to be shared; if the user permission for the target sharing user is a junior role permission, an operation such as enjoying may be performed on individual target shared objects in the multimedia list to be shared.

It should be noted that, for a user who creates a multimedia list, corresponding permission therefor is an administrator permission. Functions corresponding to the administrator permission may include operations such as editing information of a multimedia list to be shared, deleting a target shared object, adding a target shared object, deleting a multimedia list to be shared, deleting a target sharing user, and adding a target sharing user, etc.

S350: sharing the multimedia list to be shared to the target sharing user.

The technical solution of the embodiment of the present disclosure realizes an effect that a target sharing user edits and manages a multimedia list based on a corresponding user permission, improves the intelligence of multimedia list management, and improves the user experience, by displaying a multimedia list creation page, in response to a trigger operation for multimedia list creation, to edit associated content corresponding to a multimedia list to be shared in the multimedia list creation page, further displaying an information editing page to determine a target sharing user and a target shared object in the multimedia list to be shared based on a trigger operation on the information editing page, further configuring a user permission for each target sharing user, and editing invididual target shared objects in the multimedia list to be shared based on the user permission, and finally sharing the multimedia list to be shared to the target sharing user.

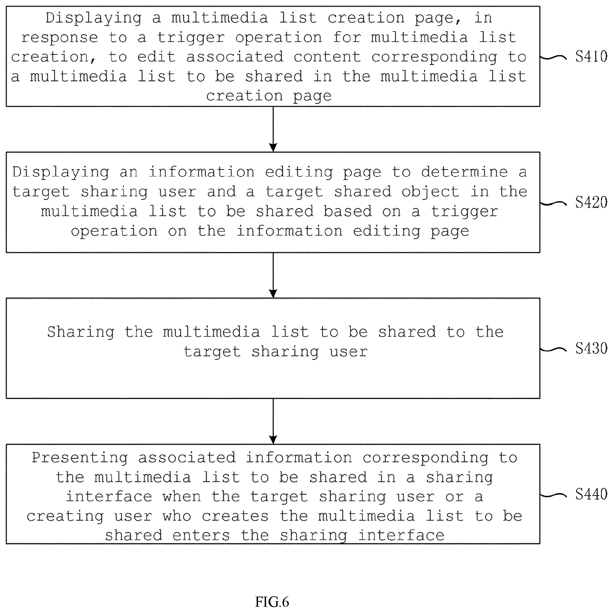

FIG. 6 is a schematic flowchart of a multimedia object sharing method provided by an embodiment of the present disclosure. On the basis of the foregoing embodiments, associated information corresponding to a multimedia list to be shared may be displayed based on a sharing interface. The specific implementation thereof may refer to the technical solution of this embodiment. Wherein, the technical terms that are the same as or corresponding to the above embodiments will not be described here again.

As shown in FIG. 6, the method specifically comprises the following steps:
S410: displaying a multimedia list creation page, in response to a trigger operation for multimedia list creation, to edit associated content corresponding to a multimedia list to be shared in the multimedia list creation page.
S420: displaying an information editing page to determine a target sharing user and a target shared object in the multimedia list to be shared based on a trigger operation on the information editing page.
S430: sharing the multimedia list to be shared to the target sharing user.
S440: presenting associated information corresponding to the multimedia list to be shared in a sharing interface when the target sharing user or a creating user who creates the multimedia list to be shared enters the sharing interface.

The associated information includes at least one user identifier information and at least one target shared object shared by the creating user and the target sharing user respectively. The at least one user identifier information includes user identifier information of the creating user and user identifier information of the target sharing user.

In this embodiment, after the target sharing user receives an invitation from the user who creates the multimedia list and joins to share the multimedia list to be shared, when the target sharing user or the creating user who creates the multimedia list to be shared enters the multimedia list to be shared, associated information corresponding to the multimedia list to be shared may be presented on the sharing interface belonging to the multimedia list to be shared.

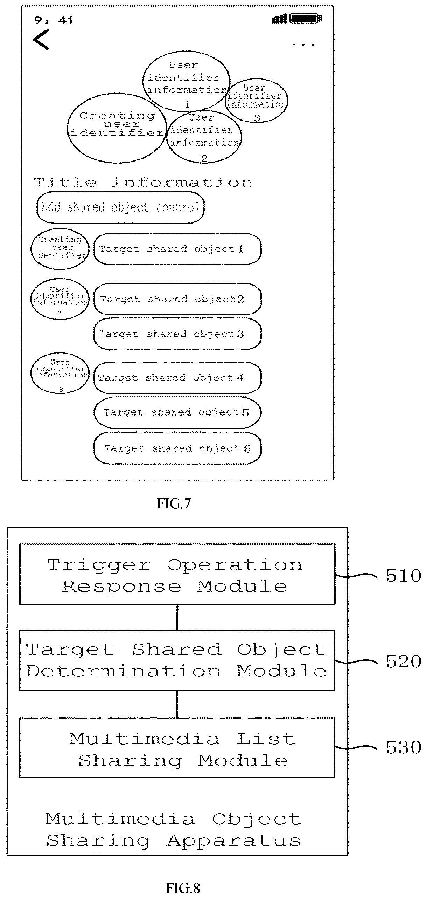

Exemplarily, as shown in FIG. 7, it is a sharing interface. The sharing interface includes creating user identifier, user identifier information 1, user identifier information 2 and user identifier information 3.

It should be noted that, the presentation form of the creating user identifier and the user identifiers of target sharing users in the sharing interface may be a tiled display, or individual identifiers may be displayed on the sharing interface according to preset reduction ratios, which is not specifically limited in the embodiments of the disclosure.

In the actual application process, when the creating user identifier and the user identifier information of the target sharing user are presented, in order to present as much information as possible in the limited interface space, only the user identifier information of a part of target sharing users may be presented. Moreover, in presenting, the creating user identifier and other user identifier information may be presented based on a certain presentation order, thereby reflecting the user identity of the creating user.

On the basis of the above technical solutions, it further comprises: at least one user identifier information is displayed on the sharing interface in accordance with a preset arrangement method.

Wherein, the preset arrangement method may be a method which is set in advance and used to arrange user identifier information. The preset arrangement method may be any method, and optionally, may include a tiled display, a stacked display, or a stacked display of at least one user identifier information on the sharing interface in accordance with a preset reduction ratio.

Optionally, the presentation method of at least one user identifier information on the sharing interface may include at least one of: displaying at least one user identifier information in tiles on the sharing interface; displaying at least one user identifier information sequentially on the sharing interface in accordance with a preset reduction ratio.

In this embodiment, the preset reduction ratio may be a ratio which is set in advance and limits the display area of the user identifier information. Wherein, the preset reduction ratio corresponds to a timestamp when the target sharing user enters the multimedia list to be shared.

In an actual application, after determining a user identifier of at least one target sharing user, the at least one user identifier may be presented in the sharing interface, and may be displayed in tiles in any area. It should be noted that, the display order of individual user identifiers may be determined based on the timestamps when the corresponding target sharing users join, or may also be determined based on other methods, which is not specifically limited in the embodiments of the present disclosure.

Another implementation may be that: after determining a user identifier of at least one target sharing user, the timestamps when individual target sharing users enter the multimedia list to be shared may be determined first, and furthermore, individual user identifiers may be processed based on preset reduction ratios, so that the display sizes of individual user identifiers on the sharing interface may be sequentially reduced based on the order of the timestamps when the corresponding target sharing users enter the multimedia list to be shared, and displayed on the sharing interface. The advantage of this setting is that it can make the arrangement relationship between multiple user identifiers more reasonable, reduce the space occupied by user identifiers in the presentation interface, and improve the page presentation effect of the sharing interface.

Optionally, presenting the creating user identifier and the user identifier information of the target sharing users in the sharing interface belonging to the multimedia list to be shared comprises: presenting the creating user identifier at the first place in a preset area in the sharing interface, and presenting a preset threshold quantity of user identifier information; when a trigger on the preset area is detected, expanding and presenting more user identifier information corresponding to the target sharing users.

In this embodiment, the preset threshold number may be a value which is set in advance and used to limit the presentation quantity of the user identifier information of the target sharing users. The preset threshold quantity may be any value, optionally, it may be 3. Wherein, the user identifier information includes a joining identifier indicating whether to join the multimedia list to be shared.

In a specific implementation, when the creating user identifier and the user identifier information of the target sharing users are presented in the sharing interface, the creating user identifier may be presented at the first place, and at the same time, a preset threshold quantity of user identifier information is presented. Further, when a trigger operation on any area in the sharing interface is detected, more user identifier information corresponding to the target sharing users may be expanded and displayed. The advantage of this setting is that it can present as much user identifier information as possible in a limited page space, and on the basis of making full use of the interface space, reflects the difference between the creating user and the target sharing users, which helps users to clearly understand the user identities of individual users.

It should be noted that, if the creating user identifier and the user identifier information of individual target sharing users are presented in tiles, the creating user identifier may be presented at the first place, and individual user identifier information is sequentially arranged. At the same time, the arrangement order of the individual user identifier information is consistent with the order in the sharing user list; if the creating user identifier and the user identifier information of individual target sharing users are displayed in accordance with preset reduction ratios, the presentation size of the creating user identifier will be the largest, and furthermore, based on the arrangement order of corresponding target sharing users in the sharing user list, the presentation sizes of individual user identification information are sequentially reduced in accordance with the preset reduction ratios, and displayed in the sharing interface.

In the actual application process, when a trigger on the sharing interface is detected, it may jump to a user list page, which includes all users associated with the multimedia list to be shared, that is, the creating user and all target sharing users. The user identifier of the creating user is presented at the first place and the user identifier information of individual target sharing users may be sequentially presented based on the order of the timestamps when they join to share the multimedia list to be shared, at the same time, the identity of the creating user and the identities of individual target sharing users, and the number of shared multimedia objects added may also be presented.

In the actual application process, the presentation order and presentation content of at least one target shared object in the sharing interface may be fixed or dynamically changed. That is, for different target sharing users, the at least one target shared object presented in a corresponding sharing interface thereof is different and may be dynamically changed based on the user needs of the corresponding target sharing user, so that at least one target shared object presented in the sharing interface can meet the user needs of the corresponding target sharing user. Exemplarily, refer to FIG. 7 again, which presents target shared object 1, target shared object 2, target shared object 3, target shared object 4, target shared object 5 and target shared object 6 accordingly, wherein individual target shared objects are displayed in association with corresponding adders.

If target software is installed on a terminal device belonging to the target sharing user, it jumps to a sharing interface based on a received target sharing link or target identification identifier.

In the actual application process, after the target sharing link or the target identification identifier is sent to the target sharing user, the target sharing user can determine whether to accept the sharing invitation for the multimedia list to be shared based on the received target sharing link or target identification identifier.

In this embodiment, the target software may be specially developed audio sharing software. The sharing interface may be an interface opened based on the corresponding target sharing link or target identification identifier. Wherein, the sharing interface includes a multimedia list cover of the multimedia list to be shared, title information, and user identifier information of at least one target sharing user joining the multimedia list to be shared.

In this embodiment, the user identifier information may be an identifier used to identify the target sharing user. The user identifier information may be any form of information, optionally, it may be a user avatar.

In a specific implementation, when a target sharing user receives a target sharing link or a target identification identifier, if a terminal device belonging to the target sharing user has the target software installed, it may jump to the sharing interface by a trigger operation on the received target sharing link or target identification identifier. The advantage of this setting is that it achieves an effect of presenting detailed information of a multimedia list based on the target software, and at the same time, enhances the interactive experience between the user and the target software.

It should be noted that, the method of sending the target sharing link or the target identification identifier to the target sharing user may be a sending in a relevant interface of the target software, or a sending to the target sharing user in other application software after copying the target sharing link or after saving the target identification identifier. Accordingly, for different sending methods, corresponding jumping methods for the sharing interface will also be different. Optionally, if the target sharing link or the target identification identifier is sent to the target sharing user based on the target software, the target sharing user may directly jump to the sharing interface based on the received target sharing link or target identification identifier; if the target sharing link or the target identification identifier is sent to the target sharing user based on other application software, and if the terminal device belonging to the target sharing user has the target software installed, the target sharing user may jump to the target software by a trigger operation on the received target sharing link or target identification identifier, and furthermore, present the sharing interface based on the target software.

It should also be noted that, after the target software is opened based on the target sharing link or the target identification identifier, at least one of the following conditions may also be determined: whether the target sharing link or target identification identifier has expired; whether the multimedia list to be shared corresponding to the target sharing link or target identification identifier has been deleted; whether the multimedia list to be shared is public; whether the user who inputs the trigger operation for the target sharing link or target identification identifier is a user who creates the multimedia list; whether the multimedia list type of the multimedia list to be shared is a shared multimedia list type; or whether the user number of target sharing users associated with the multimedia list to be shared is greater than or equal to a preset quantity threshold.

In the actual application process, if at least one of the above conditions is not met, it may jump to a corresponding interface based on the condition which is not met. Exemplarily, if the triggering time for the target sharing link or target identification identifier exceeds the preset sharing period, it jumps to a non-editable multimedia list detail page. At this time, the user can only browse the multimedia list detail page, and it cannot be edited; if the multimedia list to be shared is deleted or is not public, a text prompt window pops up to display the current status of the multimedia list to be shared based on the text prompt window; if the user who inputs the trigger operation on the target sharing link or target identification identifier is a user who creates the multimedia list, it jumps to an information addition page; if the multimedia list type of the multimedia list to be shared has been switched to a self-created multimedia list type, it jumps to the self-created multimedia list and a prompt pops up; if the user number is greater than or equal to a preset quantity threshold, it jumps to a non-editable multimedia list detail page and a window pops up to give a prompt.

On the basis of the above technical solutions, it further comprises: the display quantity of user identifier information in the sharing interface being a preset display quantity. In this embodiment, the preset display quantity may be any value, and optionally, it may be 4.

In the actual application process, when a target sharing link or a target identification identifier is sent by a multimedia list creator, it may be sent to several target sharing users, and the user number of these target sharing users is greater than the preset quantity threshold. At this time, there may be a case in which when one of the target sharing users joins the multimedia list to be shared based on the received target sharing link or target identification identifier, the number of target sharing users for the multimedia list to be shared may have reached the preset quantity threshold.

It should be noted that, in a case in which a terminal device belonging to the target sharing user does not have the target software installed, when the target sharing link or the target identification identifier is received, the received target sharing link or target identification identifier may be triggered. When the trigger operation is detected, a corresponding display interface may be opened directly based on the current application software. At this time, the display interface can also include a multimedia list cover of the multimedia list to be shared, title information, and user identifier information of at least one target sharing user joining the multimedia list to be shared, and the presentation order of user identifier information is the same as the presentation order in the sharing interface. At the same time, on the basis of these displayed contents, it can also include a join now control and a join without downloading control. When a trigger operation on the join now control is detected, it may jump to a download interface for the target software to load the target software based on the download interface; when a trigger operation on the join without downloading control is detected, it may jump to the h5 login page to enter user information to log in based on the h5 login page.

Further, after successfully logging in based on the h5 login page, at least one of the following conditions may also be determined: whether the target sharing link or target identification identifier has expired; whether the multimedia list to be shared corresponding to the target sharing link or target identification identifier has been deleted; whether the multimedia list to be shared is public; whether the user who inputs the trigger operation for the target sharing link or target identification identifier is a user who creates the multimedia list; whether the multimedia list type of the multimedia list to be shared is a shared multimedia list type; and whether the user number of target sharing users associated with the multimedia list to be shared is greater than or equal to a preset quantity threshold. If the above determination conditions are met, it may jump to a sharing reflow page and automatically join the multimedia list to be shared.

In the actual application process, the user may also perform an operation of adding a shared multimedia object on the sharing reflow page. Specifically, when a trigger operation on the add shared multimedia object control displayed on the sharing reflow page is detected, a window for adding a multimedia object pops up. At this time, the pop-up window for adding a multimedia object may include a search box control and related copywriting. The user can input a shared multimedia object to be added based on the search box control, and when a trigger operation on a confirming addition control is detected, the searched multimedia object is added to the multimedia list to be shared.

Based on this, on the basis of the above technical solutions, it further comprises: when the number of the target sharing users who join the multimedia list to be shared reaches a preset quantity threshold, and a target sharing user who newly joins the multimedia list to be shared is received, feedback information that the user upper limit has been reached is fed back to the target sharing user.

In the actual application process, when it is detected that a target sharing user joins a multimedia list to be shared, the user number of the target sharing users of the multimedia list to be shared may be detected. If it is detected the user number of the target sharing users of the multimedia list to be shared reaches a preset quantity threshold, feedback information that currently the user number of the target sharing users for the multimedia list to be shared has reached the user upper limit may be sent to the target sharing user who newly joins. The advantage of this setting is that it allows target sharing users to clearly understand the reason why they cannot join a multimedia list to be shared, and at the same time, it enhances the intelligence of the application software in managing sharing users.

In the actual application process, when a trigger operation on a join sharing control by a target sharing user is detected, it may jump to a corresponding sharing interface, and user identifier information of the target sharing user is displayed in a preset area in the sharing interface. Exemplarily, the join sharing control may be a "Join now" control.

On the basis of the above technical solutions, it further comprises: the target shared objects being presented on the sharing interface in accordance with a determined presentation order.

Optionally, the presentation order may include at least one of the following implementation s, which will be described below respectively.

The first implementation may be: the target shared object shared by the creating user being at the first presentation position in the presentation order.

In a specific implementation, if a sharing interface includes both a target shared object shared by the creating user and a target shared object shared by the target sharing user, in order to enable users browsing the sharing interface or the target sharing user to know the creator of the corresponding multimedia list to be shared, the target shared object shared by the creating user may be determined to be at the first presentation position in the presentation order, and at the same time, at least one target sharing user is presented at a corresponding position sequentially in accordance with a preset presentation rule. Wherein, the preset presentation rule may be sorting and presenting according to joining timestamps, or presenting according to sharing timestamps of the shared target shared objects, etc.

The second implementation may be: determining the presentation order in accordance with likeability corresponding to each target shared objects.

In this embodiment, the likeability may include popularity of the target shared object itself, a degree of liking of the target sharing user for the target shared object, etc. Wherein, the popularity of the target shared object itself may be determined by the searching frequency or sharing frequency for the target shared object. That is, the higher the searching frequency or sharing frequency for the target shared object, the higher the corresponding popularity thereof is.

In the actual application process, an interactive control for determining degrees of liking of individual target sharing users for at least one target shared object may be developed in advance. When a trigger operation on a control corresponding to any target shared object by a target sharing user is detected, then the degree of liking of the target sharing user for the target shared object may be determined. Further, the number of times each target sharing user triggers the interactive control corresponding to at least one target shared object may be counted, so that the likeability parameter of each target sharing user for at least one target shared object can be determined. Exemplarily, the interactive control may be set as a voting control. When a click trigger operation on any target shared object by a target sharing user is detected, the number of votes corresponding to the target shared object may be updated. Further, the number of votes corresponding to each target shared object may be taken as the likeability.

In a specific implementation, the likeability statistics of each target sharing user for at least one target shared object may be first acquired, and furthermore, based on the likeability statistics, the likeability of each target sharing user for at least one target shared object is determined, and further, a presentation order of at least one target shared object is determined according to the order from high to low in likeability, so that at least one target shared objects may be presented in the sharing interface according to the presentation order.

The third implementation may be: determining a target arrangement condition based on a trigger operation on a sorting control, to determine the presentation order of target shared objects based on the target arrangement condition.

In this embodiment, a control for sorting target shared objects in the sharing interface may be developed in advance. When a trigger operation on the control is detected, an arrangement condition presentation list may be presented, and the list may include at least one arrangement condition to determine a target arrangement condition based on a trigger operation on the at least one arrangement condition. Wherein, the arrangement condition may be the number of likes, the sharing timestamp corresponding to each target shared object, the most comments, the highest score, the number of votes, etc.

In a specific implementation, when a trigger operation on the sorting control is detected, the arrangement condition presentation list may be displayed, and furthermore, by triggering any arrangement condition presented in the list, the target arrangement condition may be determined, so that the presentation order of target shared objects in the sharing interface may be determined based on the target arrangement condition.

It should be noted that, in the actual application process, the target arrangement condition may be in a dynamic update status and may be updated through a trigger operation by the user. At the same time, when the target arrangement condition is updated, the presentation order of the target shared objects is also updated accordingly.

The fourth implementation may be: for individual target sharing users, determining the presentation order of at least one target shared object with respect to the current target sharing user according to a matching degree of historical multimedia object play data of the current target sharing user and the at least one target shared object, and performing a presentation according to the presentation order.

In this embodiment, the historical multimedia object play data may be data corresponding to multimedia objects played by the target sharing user within a preset time period before the current moment. Optionally, the historical multimedia object play data may include data such as multimedia object play frequency, multimedia object play quantity, and multimedia object type corresponding to the played multimedia object, etc.

In the actual application process, the presentation order of at least one target shared object is determined according to the matching degree of the historical multimedia object play order and the at least one target shared object. Specifically, the presentation order of at least one target shared object may be determined according to the order of the matching degree from high to low, that is, the target shared object ranked first is the multimedia object that has the highest matching degree with the historical multimedia object play data of the corresponding target sharing user.

In a specific implementation, for individual target sharing users, the historical multimedia object play data of the current target sharing user may be first acquired, and furthermore, based on a preset algorithm, the matching degree of the historical multimedia object play data with at least one target shared object is determined. Further, the presentation order of at least one target shared object is determined according to the order of the matching degree from high to low, so that the at least one target shared object may be presented in the sharing interface according to the presentation order, and at the same time, individual matching degrees may also be displayed in target display areas corresponding to respective target shared objects. The advantage of this setting is that it achieves an effect that the presentation order of target shared objects is dynamically adjusted based on the user needs of the target sharing users, and for different target sharing users, the corresponding presentation orders are different, which meets the personalized needs of the users and improves the user experience.

In the actual application process, when a shared multimedia object is to be newly added in the sharing interface, the presentation order of at least one target shared object presented in the sharing interface may also be adjusted, so that detailed information corresponding to the shared multimedia object which is newly added may be displayed in the sharing interface clearly. The advantage of this setting is that it makes the presentation order of the target shared objects meet the preference of the user, and further improves the user experience.

On the basis of the above technical solutions, it further comprises: at least one user identifier information being linked to the presentation order of the target shared object.

In a specific implementation, a target shared object is a multimedia object which a creating user and at least one target sharing user share to a multimedia list to be shared. When user identifier information and the at least one target shared object are presented in the sharing interface, it is possible to link the presentation orders of these two types of information, that is, if the presentation order of the user identifier information is changed, the corresponding presentation order of the target shared objects will also be updated accordingly; if the presentation order of the target shared objects is changed, the corresponding presentation order of the user identifier information will also be updated. Exemplarily, if the target shared object displayed at the first place in the sharing interface is a multimedia object shared by the target sharing user 2, the user identifier information displayed at the first place in the sharing interface is the user identifier information of the target sharing user 2.

On the basis of the above technical solutions, it further comprises: if the same target shared object is triggered to be shared by at least one target sharing user, displaying the target shared object in the sharing interface; and displaying user identifier information of the at least one target sharing user at a position associated with the target shared object.

In this embodiment, the display method of the user identifier information of the at least one target sharing user may be a tiled display or a stacked display. When it is a stacked display, the display size of the at least one user identifier information may be reduced in accordance with the addition timestamp, that is, the display size of the user identifier information of the target sharing user who first adds the target shared object to the multimedia list to be shared is the largest, and then, according to the timestamps when other target sharing users add the target shared object to the list to be shared, the display sizes of the corresponding user identifier information will be sequentially reduced.

In a specific implementation, if the same target shared object is triggered to be added to a multimedia list to be shared by at least one target sharing user, the target shared object may be displayed in the sharing interface, and at the same time, the identifier information of at least one user who shares the target shared object is displayed at a position associated with the target shared object.

On the basis of the above technical solutions, it further comprises: if the same target sharing user successively shares at least two target shared objects, displaying user identifier information of the target sharing user at a position associated with the first target shared object among the at least two target shared objects.

In a specific implementation, if the same target sharing user successively adds at least two target shared objects to the multimedia list to be shared, the at least two target shared objects may be displayed in the sharing interface in a preset presentation order, and at the same time, the user identifier information of the corresponding target sharing user is displayed at a position associated with the first target shared object among the at least two target shared objects.

It should be noted that, if, in the actual application process, the presentation order of the at least two target shared objects changes, the user identifier information of the corresponding target sharing user will always be displayed at the position associated with the target shared object arranged at the first place.

Optionally, the sharing interface further comprises a control for editing a target shared object, so as to perform an operation processing on the target shared object based on a trigger operation on the control and user permission of the corresponding target sharing user.

In this embodiment, performing an operation processing on a target shared object may include deleting a target shared object, playing a target shared object, and changing the order of target shared objects.

In a specific implementation, when an operation processing is performed on a target shared object in a sharing interface, the target shared object may be edited according to the user permission of the corresponding target sharing user. For different user permissions, the corresponding editing operations are different. Optionally, for a senior user permission, the corresponding editing for a target shared object may include operations of deleting the target shared object, adding the target shared object, bookmarking the target shared object, and enjoying the target shared object; for a junior user permission, the corresponding editing for a target shared object may include an operation of enjoying the target shared object.

On the basis of the above technical solutions, it further comprises: if the operation processing is to switch the shared multimedia list type to another multimedia list type, at least one target sharing user will not be displayed, and the multimedia list to be shared is invisible to at least one target sharing user.

In the actual application process, if it is detected that the multimedia list type of the multimedia list to be shared is switched from the shared multimedia list type to another multimedia list type, the page style of the sharing interface will be adjusted accordingly, and at the same time, at least one target sharing user will not be displayed in the sharing interface, the target shared objects in the multimedia list to be shared will be retained, and the cover style of the multimedia list to be shared will be changed accordingly to use the cover of another multimedia list. Moreover, the multimedia list to be shared is invisible to at least one target sharing user, that is, at least one target sharing user cannot view the multimedia list to be shared.

It should be noted that, if it is detected that the multimedia list type of the multimedia list to be shared is switched to a shared multimedia list type from another multimedia list type, the page style of the sharing interface will be changed accordingly, and the target shared objects in the multimedia list to be shared will be retained, and will be displayed in association with the identifier of the creating user.

In the actual application process, the creating user may also change the retention status of the multimedia list to be shared, and set the multimedia list to be shared to a viewable status or an unviewable status. When the multimedia list to be shared is in an unviewable status, the target sharing user can still enter and edit the multimedia list to be shared, however, other users cannot enter; when the multimedia list to be shared is in an unviewable status, a target sharing link or a target identification identifier cannot be generated, that it, inviting other sharing users to join to share the multimedia list to be shared is not supported.

On the basis of the above technical solutions, it further includes: displaying a user list including at least one target sharing user based on a trigger operation on the sharing interface, and displaying the number of shared objects at a position corresponding to the target sharing user.

In this embodiment, a user list presenting control may be developed in advance in any area in the sharing interface, and when a trigger operation on the control is detected, the user list may be displayed. Optionally, the display method of the user list may be displaying in a pop-up window, or adjusting the presentation size of the sharing interface in the display interface and displaying at a preset position in the display interface, or jumping to the user list presentation interface from the sharing interface.

In a specific implementation, when a trigger operation on any area in the sharing interface is detected, a user list including at least one target sharing user may be displayed, and the number of target shared objects which are shared by each target sharing user may also be displayed at a position corresponding to the target sharing user.

On the basis of the above technical solutions, it further comprises: when an operation of adding a shared multimedia object in the sharing interface is detected, inserting the shared multimedia object into the first place of at least one target shared object, and adding corresponding user identifier information and the number of insertions at a position associated with the shared multimedia object.

In this embodiment, the associated position may be any area around the shared multimedia object display area. Wherein, the user identifier information corresponds to the adder of the shared multimedia object.

In a specific implementation, when an operation of adding a shared multimedia object in the sharing interface is detected, the newly added shared multimedia object may be inserted into the first place of at least one target shared object presented in the sharing interface, and the adder of the shared multimedia object is determined, and user identifier information corresponding to the adder is acquired, and further, the acquired user identifier information and the number of insertions are added at a position associated with the shared multimedia object. The advantage of this setting is that a shared multimedia object newly added to a multimedia list to be shared and user information of the adder of the shared multimedia object may be clearly displayed based on a sharing interface.

In the actual application process, when a trigger operation on user identifier information added at the associated position is detected, a homepage of the corresponding target sharing user may be entered.

It should be noted that, if shared multimedia objects added successively are performed by the same adder, the corresponding user identifier information may be added only at a position associated with the first shared multimedia object.

In the actual application process, there may be a situation where the sharing interface is a blank page, that is, there is a lack of page display data corresponding to the sharing interface. At this time, different blank sharing interfaces may be displayed for different users. For a creating user, the blank sharing interface may include an add shared multimedia object control, an add sharing user control, and related copywriting; for a target sharing user with a senior role permission, the blank sharing interface may include an add shared multimedia object control, a bookmark control, and related copywriting; for a target sharing users with a junior role permission, the blank sharing interface may include a bookmark control and related copywriting.

On the basis of the above technical solutions, it further comprises: determining the target sharing user to which at least one target shared object in the sharing interface belongs, determining a similarity between each target sharing user and the creating user, and displaying the similarity in association with the user identifier information.

In this embodiment, the similarity may be used to characterize a degree of similarity in multimedia object taste between the creating user and the target sharing user.

In the actual application process, the target sharing user to which at least one target shared object in the sharing interface belongs may be first determined, and then, the multimedia object likeability parameter corresponding to the at least one target sharing user, and the multimedia object likeability parameter corresponding to the creating user are acquired. Further, based on a preset similarity calculation algorithm, or a pre-deployed deep learning neural network model for calculating similarity, the multimedia object likeability parameter corresponding to each target sharing user and the multimedia object likeability parameter for the creating user may be processed respectively, and furthermore, the similarity between each target sharing user and the creating user may be obtained, and each similarity is displayed in a target display area around the user identifier information of the corresponding target sharing user. At the same time, a target shared object that is liked by the target sharing user and the creating user in common may also be displayed on the corresponding area of the user identifier information of the corresponding target sharing user. The advantage of this setting is that the similarity in multimedia object taste between the creating user and the target sharing user may be clearly displayed based on the sharing interface, furthermore, it is possible to make the creating user and the target sharing user add shared multimedia objects in a targeted manner, which further improves the adaptability of individual target shared objects included in the multimedia to be shared list to associated users.

It should be noted that, while the similarity is displayed in association with the user identifier information, a multimedia object that is liked by the creating user and the corresponding target sharing user in common may also be displayed. If it is detected that there is no multimedia object liked by the creating user and the corresponding target sharing user in common, the target shared objects will be listed separately and uniformly.

Exemplarily, a total of 50 target shared objects are added to a multimedia list to be shared which is shared by user A, user B, user C, user D, user E, and user F. Wherein, user D is the creating user. First, the similarity between user D and each person is calculated, and the similarities are displayed in order from high to low: 20 songs being liked by User D and User A in common, 10 songs being liked by User D and User B in common, 3 songs being liked by User D and User C in common, and 17 other songs.

On the basis of the above technical solutions, it further comprises: if a target sharing user is removed from the sharing interface by the creating user, retaining operation traces of the target sharing user on the multimedia list to be shared; if it is detected that a target sharing user triggers an operation of exiting from the sharing interface, the creating user will not be notified.

In this embodiment, the operation traces may be target shared objects added by the target sharing user to the multimedia list to be shared and the bookmark status of the multimedia list.

In the actual application process, if a target sharing user is removed from the sharing interface by the creating user, operation traces of the removed target sharing user on the multimedia list to be shared may be retained, and at the same time, the removed target sharing user and other target sharing users will not be notified; if a trigger operation on an exit control presented in the sharing interface by the target sharing user is detected, operation traces of the corresponding target sharing user on the multimedia list to be shared may also be retained, and the creating user will not be notified.

In the actual application process, there may be multiple situations where a target sharing user is removed from the sharing interface. These situations will be described in detail below: in the first situation, if it is detected that the creating user triggers an operation of deleting a multimedia list, at least one target sharing user associated with the deleted multimedia list to be shared will be removed, and at the same time, the target sharing user will not be notified; in the second situation, if it is detected that a target sharing user is added to a blacklist by the creating user, the target sharing user will be removed from the sharing interface; in the third situation, if it is detected that the multimedia list type of the multimedia list to be shared is switched to the self-created multimedia list type from the shared multimedia list type, all associated target sharing users are removed from the sharing interface; in the fourth situation: if an account logout operation of the creating user or a target sharing user is detected, the target sharing user is removed from the sharing interface.

The technical solution of the embodiment of the present disclosure achieves an effect that an identifier of a creating user, user identifier information of a target sharing user, and a target shared object are presented based on a sharing interface, improves the interface utilization, may make users browse more intuitively, achieves an effect of meeting user needs, and improves the user experience, by displaying a multimedia list creation page, in response to a trigger operation for multimedia list creation, to edit associated content corresponding to a multimedia list to be shared in the multimedia list creation page, further displaying an information editing page to determine a target sharing user and a target shared object in the multimedia list to be shared based on a trigger operation on the information editing page, and finally sharing the multimedia list to be shared to the target sharing user, and displaying associated information corresponding to the multimedia list to be shared in a sharing interface when the target sharing user or the creating user who creates the multimedia list to be shared enters the sharing interface.

FIG. 8 is a schematic structural diagram of a multimedia object sharing apparatus provided by an embodiment of the present disclosure. As shown in FIG. 8, the apparatus comprises: a trigger operation response module 510, a target shared object determination module 520, and a multimedia list sharing module 530.

Wherein, the trigger operation response module 510 is used to display a multimedia list creation page, in response to a trigger operation for multimedia list creation, to edit associated content corresponding to a multimedia list to be shared in the multimedia list creation page.

The target shared object determination module 520 is used to display an information editing page to determine a target sharing user and a target shared object in the multimedia list to be shared based on a trigger operation on the information editing page, wherein the information editing page includes at least one of an add shared object control, an add sharing user control, or at least one object to be shared.

The multimedia list sharing module 530 is used to share the multimedia list to be shared to the target sharing user.

On the basis of the above technical solutions, the multimedia list creation page includes a title editing control and a to-be-shared multimedia list type editing control, to edit title information of the multimedia list to be shared in the title editing control, and select a multimedia list type in the to-be-shared multimedia list type editing control; wherein the multimedia list type includes at least a shared multimedia list type.

On the basis of the above technical solutions, the target shared object determination module 520 is specifically used to add a multimedia object to be shared that is selected by triggering to the multimedia list to be shared; display a multimedia object presentation interface based on a trigger operation on a multimedia object addition control, to display the multimedia object to be shared that is selected by triggering in the multimedia object presentation interface, in the multimedia list to be shared.

On the basis of the above technical solutions, the apparatus further comprises: a to-be-shared multimedia object display module.

The to-be-shared multimedia object display module is used to , after the multimedia object to be shared is selected by triggering, display at least one multimedia object to be shared which is associated with the multimedia object to be shared.

On the basis of the above technical solutions, the multimedia list sharing module 530 is specifically used to determine a corresponding target sharing method according to affiliation information of the target sharing user and a target client, to share the multimedia list to be shared to the corresponding target sharing user based on the target sharing method; wherein the affiliation information includes belonging to a site user or a non-site user, the site user being a user who has installed the target client.

On the basis of the above technical solutions, the apparatus further comprises: a sharing period configuration module.

The sharing period configuration module is used to configure a sharing period for the multimedia list to be shared, so that individual target sharing users share the multimedia list to be shared within the sharing period.

On the basis of the above technical solutions, the apparatus further comprises: a user permission configuration module and a target shared object editing module.

The user permission configuration module is used to configure a user permission for a target sharing user.

The target shared object editing module is used to process the multimedia list to be shared based on the user permission.

On the basis of the above technical solutions, the apparatus further comprises: an associated information presenting module.

When the target sharing user or a creating user who creates the multimedia list to be shared enters a sharing interface, associated information corresponding to the multimedia list to be shared is presented in the sharing interface.

Wherein, the associated information includes at least one user identifier information, and at least one target shared object which is shared by the creating user and the target sharing user respectively, the at least one user identifier information including user identifier information of the creating user and user identifier information of the target sharing user.

On the basis of the above technical solutions, the apparatus further comprises: a first user identifier information display module.

The first user identifier information display module is used to display the at least one user identifier information on the sharing interface according to a preset arrangement method.

On the basis of the above technical solutions, the apparatus further comprises: a target shared object presenting module.

The target shared object presenting module is used to present the target shared object on the sharing interface according to a determined presentation order.

On the basis of the above technical solutions, the presentation order includes at least one of the following:
the target shared object which is shared by the creating user being at the first presentation position in the presentation order;
determining the presentation order in accordance with likeability corresponding to each target shared object;
determining a target arrangement condition based on a trigger operation on a sorting control, to determine the presentation order of the target shared object based on the target arrangement condition.

On the basis of the above technical solutions, the apparatus further comprises: a presentation order linking module.

The presentation order linking module is used to link the at least one user identifier information to the presentation order of the target shared object.

On the basis of the above technical solutions, the apparatus further comprises: a target shared object display module and a second user identifier information display module.

The target shared object display module is used to, if the same target shared object is triggered to be shared by at least one target sharing user, display the target shared object in the sharing interface;
The second user identifier information display module is used to display user identifier information of the at least one target sharing user at a position associated with the target shared object.

On the basis of the above technical solutions, the apparatus further comprises: a third user identifier information display module.

The third user identifier information display module is used to, if the same target sharing user successively shares at least two target shared objects, display user identifier information of the target sharing user at a position associated with the first target shared object among the at least two target shared objects.

On the basis of the above technical solutions, the sharing interface further includes a control for editing a target shared object, to perform an operation processing on the target shared object based on a trigger operation on the control and a user permission of the corresponding target sharing user.

On the basis of the above technical solutions, the apparatus further comprises: a list type switching module.

The list type switching module is used to, if the operation processing is to switch the shared multimedia list type to another multimedia list type, not display the at least one target sharing user, and the multimedia list to be shared is invisible to the at least one target sharing user.

On the basis of the above technical solutions, the apparatus further comprises: a user list display module.

The user list display module is used to display a user list including at least one target sharing user based on a trigger operation on the sharing interface, and display the number of shared objects at a position corresponding to the target sharing user.

The technical solution of the embodiment of the present disclosure solves a problem that the played multimedia objects cannot meet the multimedia object requirements of most users and have certain limitations in the related art, achieves an effect that the multimedia list creating user and at least one multimedia list sharing user share and manage the multimedia list together and the multimedia list is endowed with a social attribute, enriches application scenes of the multimedia list, and improves the user experience, by displaying a multimedia list creation page, in response to a trigger operation for multimedia list creation, to edit associated content corresponding to a multimedia list to be shared in the multimedia list creation page, further displaying an information editing page, to determine a target sharing user and a target shared object in the multimedia list to be shared based on a trigger operation on the information editing page, and finally sharing the multimedia list to be shared to the target sharing user.

The multimedia object sharing apparatus provided by the embodiment of the present disclosure can execute the multimedia object sharing method provided by any embodiment of the present disclosure, and has functional modules and beneficial effects corresponding to the execution of the method.

It should be noted that, the individual units and modules included in the above apparatus are only divided according to functional logic, but are not limited to the above division, as long as they can achieve corresponding functions; in addition, the specific names of individual functional units are only to facilitate distinguishing from each other, and they are not used to limit the protection scopes of the embodiments of the present disclosure.

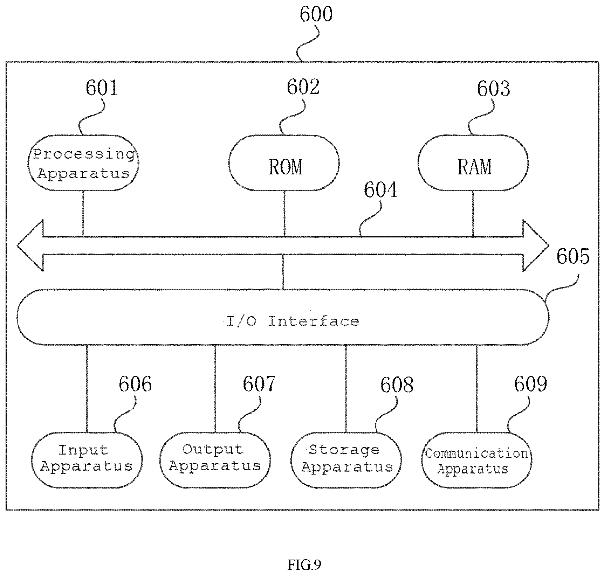

FIG. 9 is a schematic structural diagram of an electronic device provided by an embodiment of the present disclosure. Referring to FIG. 9 below, it shows a schematic structural diagram of an electronic device (such as a terminal device or a server in FIG. 9) 600 suitable for implementing an embodiment of the present disclosure. The terminal device in the embodiment of the present disclosure may include but not limited to a mobile terminal such as a mobile phone, a notebook, a digital broadcast receiver, a PDA (Personal Digital Assistant), a PAD (tablet), a PMP (Portable Multimedia Player), a vehicle-mounted terminal (such as a car navigation terminal),and so on, and a fixed terminal such as a digital TV, a desktop computer, and so on. The electronic device shown in FIG. 9 is only an example, and should not bring any limitation to the functions and scope of usages of the embodiments of the present disclosure.

As shown in FIG. 9, the electronic device 600 may include a processing apparatus (for example a central processor, a graphics processor, etc.) 601, which can execute various appropriate actions and processes according to a program stored in a read-only memory (ROM) 602 or a program loaded from a storage apparatus 608 into a random-access memory (RAM) 603. In the RAM 603, various programs and data required for the operation of the electronic device 600 are also stored. The processing apparatus 601, ROM 602, and RAM 603 are connected to each other through a bus 604. An input/output (I/O) interface 605 is also connected to the bus 604.

Generally, the following apparatuses can be connected to the I/O interface 605: an input apparatus 606 including for example, a touch screen, a touch pad, a keyboard, a mouse, a camera, a microphone, an accelerometer, a gyroscope, etc.; an output apparatus 607 including for example, a liquid crystal display (LCD), a speaker, a vibrator, etc.; a storage apparatus 608 including for example, a magnetic tape, a hard disk, etc.; and a communication apparatus 609. The communication apparatus 609 may allow the electronic device 600 to perform wireless or wired communication with other devices to exchange data. Although FIG. 9 shows an electronic device 600 having various apparatuses, it should be understood that it is not required to implement or have all of the shown apparatuses. It can alternatively be implemented or provided with more or fewer apparatuses.

In particular, according to an embodiment of the present disclosure, the processes described above with reference to the flowcharts can be implemented as computer software programs. For example, an embodiment of the present disclosure includes a computer program product, which includes a computer program carried on a non-transitory computer readable medium, and the computer program contains program code for performing the method shown in the flowchart. In such an embodiment, the computer program may be downloaded and installed from the network through the communication apparatus 609, or installed from the storage apparatus 608, or installed from the ROM 602. When the computer program is executed by the processing apparatus 601, the above functions defined in the method of the embodiment of the present disclosure are executed.

The names of messages or information interacted between a plurality of apparatuses in the implementation of the present disclosure are only used for an illustration, and are not used to limit the scope of these messages or information.

The electronic device provided by the embodiment of the present disclosure and the multimedia object sharing method provided by the above embodiments belong to the same inventive concept. Technical details that are not described in detail in this embodiment may be referred to the above embodiments, and this embodiment has the same beneficial effects as the above embodiments.

An embodiment of the present disclosure provides a computer storage medium having a computer program stored thereon, which, when executed by a processor, implements the multimedia object sharing method provided by the above embodiments.

It should be noted that, the above computer-readable medium in the present disclosure may be a computer-readable signal medium or a computer-readable storage medium, or any combination of thereof. The computer-readable storage medium may be, for example, but not limited to, an electrical, magnetic, optical, electromagnetic, infrared, or semiconductor system, apparatus, or device, or any combination thereof. More specific examples of computer-readable storage media may include, but are not limited to: an electrical connection with one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program, and the program may be used by or in combination with an instruction execution system, apparatus, or device. In the present disclosure, a computer-readable signal medium may include a data signal propagated in a baseband or as a part of a carrier wave, in which a computer-readable program code is carried. This propagated data signal can take many forms, including but not limited to electromagnetic signals, optical signals, or any suitable combination thereof. The computer-readable signal medium may also be any computer-readable medium other than the computer-readable storage medium. The computer-readable signal medium may send, propagate, or transmit the program for use by or in combination with the instruction execution system, apparatus, or device. The program code contained on the computer-readable medium can be transmitted by any suitable medium, including but not limited to: wire, optical cable, RF (Radio Frequency), etc., or any suitable combination thereof.

In some embodiments, the client and server can communicate with any currently known or future developed network protocol such as HTTP (HyperText Transfer Protocol), and can interconnect with digital data communication (for example, communication network) in any form or medium. Examples of communication networks include local area networks ("LAN"), wide area networks ("WAN"), international network (for example, the Internet), and end-to-end networks (for example, ad hoc end-to-end networks), as well as any currently known or future developed networks.

The above computer-readable medium may be included in the above electronic device; or it may exist alone without being assembled into the electronic device.

The above computer-readable medium carries one or more programs, which, when executed by the electronic device, cause the electronic device to:
display a multimedia list creation page, in response to a trigger operation for multimedia list creation, to edit associated content corresponding to a multimedia list to be shared in the multimedia list creation page;
display an information editing page to determine a target sharing user and a target shared object in the multimedia list to be shared based on a trigger operation on the information editing page, wherein the information editing page includes at least one of an add shared object control, an add sharing user control, or at least one object to be shared; and
share the multimedia list to be shared to the target sharing user.

The computer program code for performing the operations of the present disclosure can be written in one or more programming languages or a combination thereof. The above programming languages include but are not limited to object-oriented programming languages such as Java, Smalltalk, C++, and include conventional procedural programming languages such as "C" language or similar programming languages. The program code can be executed entirely on a user's computer, partly executed on a user's computer, executed as an independent software package, partly executed on a user's computer and partly executed on a remote computer, or entirely executed on a remote computer or server. In the case of involving a remote computer, the remote computer can be connected to a user's computer through any kind of network, including a local area network (LAN) or a wide area network (WAN), or it can be connected to an external computer (for example, connected by using Internet provided by an Internet service provider).

The flowcharts and block diagrams in the accompanying drawings illustrate possible architecture, function, and operation implementations of a system, method, and computer program product according to various embodiments of the present disclosure. In this regard, each block in a flowchart or block diagram may represent a module, program segment, or part of code, which contains one or more executable instructions for realizing specified logic functions. It should also be noted that, in some alternative implementations, functions marked in a block may also occur in a different order than the order marked in the drawings. For example, two blocks shown in succession can actually be executed substantially in parallel, and they can sometimes be executed in the reverse order, depending on functions involved. It should also be noted that, each block in a block diagram and/or flowchart, and the combination of blocks in a block diagram and/or flowchart, can be implemented by a dedicated hardware-based system that performs the specified functions or operations, or it can be implemented by a combination of dedicated hardware and computer instructions.

The units involved in the embodiments of the present disclosure may be implemented in software or hardware. Wherein, the name of the unit does not constitute a limitation on the unit itself under certain circumstances. For example, a first acquisition unit may also be described as "a unit that acquires at least two Internet Protocol addresses".

The functions described herein above may be performed at least in part by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logical device (CPLD) and so on.

In the context of the present disclosure, a machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of machine-readable storage media may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above description is only preferred embodiments of the present disclosure and an explanation to the technical principles applied. Those skilled in the art should understand that the scope of disclosure involved in this disclosure is not limited to technical solutions formed by specific combination of above technical features, and should also cover other technical solutions formed by arbitrarily combining above technical features or equivalent features thereof without departing from above disclosed concept. For example, those technical solutions formed by exchanging of above features and technical features disclosed in the present disclosure (but not limited to) having similar functions with each other.

In addition, although various operations are depicted in a specific order, this should not be understood as requiring these operations to be performed in the specific order shown or performed in a sequential order. Under certain circumstances, multitasking and parallel processing may be advantageous. Likewise, although several specific implementation details are included in above discussion, these should not be construed as limiting the scope of the present disclosure. Certain features that are described in the context of separate embodiments can also be implemented in combination in a single embodiment. Conversely, various features described in the context of a single embodiment can also be implemented in multiple embodiments individually or in any suitable subcombination.

Although the subject matter has been described in languages specific to structural features and/or logical actions of the method, it should be understood that the subject matter defined in the appended claims is not necessarily limited to the specific features or actions described above. Rather, the specific features and actions described above are merely exemplary forms for implementing the claims.

## Claims

1. A multimedia object sharing method, comprising:
displaying a multimedia list creation page, in response to a trigger operation for multimedia list creation, to edit associated content corresponding to a multimedia list to be shared in the multimedia list creation page;
displaying an information editing page to determine a target sharing user and a target shared object in the multimedia list to be shared based on a trigger operation on the information editing page, wherein the information editing page includes at least one of an add shared object control, an add sharing user control, or at least one object to be shared; and
sharing the multimedia list to be shared to the target sharing user.

2. The method according to claim 1, wherein the multimedia list creation page includes a title editing control and a to-be-shared multimedia list type editing control, to edit title information of the multimedia list to be shared in the title editing control, and select a multimedia list type in the to-be-shared multimedia list type editing control;
wherein the multimedia list type includes at least a shared multimedia list type.

3. The method according to any one of claims 1-2, wherein operations on the information editing page comprise at least one of:
adding a multimedia object to be shared that is selected by triggering to the multimedia list to be shared;
displaying a multimedia object presentation interface based on a trigger operation on a multimedia object addition control, to display the multimedia object to be shared that is selected by triggering in the multimedia object presentation interface, in the multimedia list to be shared.

4. The method according to claim 3, further comprising:
after the multimedia object to be shared is selected by triggering, displaying at least one multimedia object to be shared which is associated with the multimedia object to be shared.

5. The method according to any one of claims 1-4, wherein the sharing the multimedia list to be shared to the target sharing user comprises:
determining a corresponding target sharing method according to affiliation information of the target sharing user and a target client, to share the multimedia list to be shared to the corresponding target sharing user based on the target sharing method;
wherein the affiliation information includes belonging to a site user or a non-site user, the site user being a user who has installed the target client.

6. The method according to any one of claims 1-5, further comprising:
configuring a sharing period for the multimedia list to be shared, so that individual target sharing users share the multimedia list to be shared within the sharing period.

7. The method according to any one of claims 1-6, further comprising:
configuring a user permission for a target sharing user;
processing the multimedia list to be shared based on the user permission.

8. The method according to any one of claims 1-7, further comprising:
when the target sharing user or a creating user who creates the multimedia list to be shared enters a sharing interface, presenting associated information corresponding to the multimedia list to be shared in the sharing interface;
wherein the associated information includes at least one user identifier information, and at least one target shared object which is shared by the creating user and the target sharing user respectively, the at least one user identifier information including user identifier information of the creating user and user identifier information of the target sharing user.

9. The method according to claim 8, further comprising:
the at least one user identifier information being displayed on the sharing interface according to a preset arrangement method.

10. The method according to claim 8, further comprising:
the target shared object being presented on the sharing interface according to a determined presentation order.

11. The method according to claim 10, wherein the presentation order includes at least one of the following:
the target shared object which is shared by the creating user being at the first presentation position in the presentation order;
determining the presentation order in accordance with likeability corresponding to each target shared object;
determining a target arrangement condition based on a trigger operation on a sorting control, to determine the presentation order of the target shared object based on the target arrangement condition.

12. The method according to claim 8, further comprising:
the at least one user identifier information being linked to the presentation order of the target shared object.

13. The method according to claim 8, further comprising:
if the same target shared object is triggered to be shared by at least one target sharing user, displaying the target shared object in the sharing interface;
displaying user identifier information of the at least one target sharing user at a position associated with the target shared object.

14. The method according to claim 8, further comprising:
if the same target sharing user successively shares at least two target shared objects, displaying user identifier information of the target sharing user at a position associated with the first target shared object among the at least two target shared objects.

15. The method according to claim 8, wherein the sharing interface further includes a control for editing a target shared object, to perform an operation processing on the target shared object based on a trigger operation on the control and a user permission of the corresponding target sharing user.

16. The method according to claim 15, further comprising:
if the operation processing is to switch the shared multimedia list type to another multimedia list type, the at least one target sharing user being not displayed, and the multimedia list to be shared being invisible to the at least one target sharing user.

17. The method according to claim 8, further comprising:
displaying a user list including at least one target sharing user based on a trigger operation on the sharing interface, and displaying the number of shared objects at a position corresponding to the target sharing user.

18. A multimedia object sharing apparatus, comprising:
a trigger operation response module for displaying a multimedia list creation page, in response to a trigger operation for multimedia list creation, to edit associated content corresponding to a multimedia list to be shared in the multimedia list creation page;
a target shared object determination module for displaying an information editing page to determine a target sharing user and a target shared object in the multimedia list to be shared based on a trigger operation on the information editing page, wherein the information editing page includes at least one of an add shared object control, an add sharing user control, or at least one object to be shared; and
a multimedia list sharing module for sharing the multimedia list to be shared to the target sharing user.

19. An electronic device, comprising:
one or more processors;
a storage apparatus for storing one or more programs,
the one or more programs when executed by the one or more processors cause the one or more processors to implement the multimedia object sharing method according to any one of claims 1-17.

20. A storage medium containing computer-executable instructions which, when executed by a computer processor, are used to perform the multimedia object sharing method according to any one of claims 1-17.

21. A computer program comprising instructions which, when executed by a processor, implement the multimedia object sharing method according to any one of claims 1-17.

22. A computer program product comprising instructions which, when executed by a processor, implement the multimedia object sharing method according to any one of claims 1-17.
